# DEMANDE DE BREVET EUROPEEN

(11) **EP 0 704 644 A1**
(43) Date de publication de la demande: **03.04.1996**
(21) Numéro de dépôt: 95420262.8
(22) Date de dépôt: 22.09.1995
(51) Int. Cl.: F16H 61/26, F16H 63/30

(54) **Dispositif de transmission des mouvements d'une barre de commande pour boîte de vitesses**

(30) Priorité: 30.09.1994 FR 9412024
(71) Demandeur: SYSTECO S.A., F-42350 La Talaudière (FR)
(72) Inventeur: Tholly, Paul, F-42170 Saint Just Saint Rambert (FR)
(74) Mandataire: Thivillier, Patrick

(57) **Abrégé**

Le dispositif présente un corps (1) en matière plastique moulée présentant directement lors du moulage, des éléments du type rotule (2) et (3) aptes à assurer l'accouplement de biellettes de sélection et de réaction fixées sur une partie de la boîte de vitesses, ledit corps (1) présentant, directement au moulage, une bague transversale (4) pour le montage d'un élément de renvoi de passage des vitesses et, d'une manière perpendiculaire aux génératrices de la bague, un agencement (5) apte à permettre l'accouplement de la barre de commande.

## Description

L'invention se rattache au secteur technique des équipements pour véhicules automobiles.

Plus particulièrement, l'invention concerne une commande de boîte de vitesses, au moyen d'une barre accouplée au pied du levier de vitesses.

D'une manière parfaitement connue, l'extrémité de la barre, à l'opposé de sa partie d'accouplement avec le pied de levier de vitesses, est solidaire transversalement d'une bague ou manchon, dont l'alésage est destiné à coopérer avec une tête sphérique d'un élément de renvoi apte à assurer le passage des vitesses.

Notamment, l'extrémité de la barre est fixée par soudure, à une plaque profilée qui est cintrée pour constituer deux ailes disposées angulairement. Entre les deux ailes, est fixé, transversalement, la bague ou manchon, destiné à recevoir l'élément de renvoi. A noter que l'alésage de cette bague peut présenter un revêtement du type de celui connu sous la marque TEFLON®.

Les extrémités de chacune des ailes présentent une rotule pour le montage respectivement, d'une biellette de sélection et de réaction, coopérant avec une partie de la boîte de vitesses.

On conçoit que cette conception est relativement compliquée et nécessite un assemblage et un usinage de plusieurs pièces, ce qui augmente les coûts. En effet, il est nécessaire, après avoir soudé la pièce profilée en bout de la barre de commande, de souder la bague, de réaléser la bague après sa fixation, pour la mise en place éventuelle du revêtement TEFLON® et, enfin, de sertir les rotules. En outre, l'ensemble de ces pièces doivent être protégées de la corrosion, au moyen d'un traitement de surface spécial.

Par ailleurs, l'usinage doit être très précis, étant donné que les rotules d'articulation des biellettes doivent être positionnées selon des entraxes déterminés.

A noter également que les rotules sont en acier doux, de sorte qu'il est nécessaire de mettre une protection anti-corrosion.

En outre, pour tenter de diminuer les vibrations, l'extrémité libre des biellettes présente un tampon en caoutchouc qui isole la partie recevant la rotule du corps, avec la possibilité d'un déplacement axial. Cette solution est onéreuse.

L'invention s'est fixée pour but de remédier à ces inconvénients, de manière simple, sûre, efficace et rationnelle.

Le problème que se propose de résoudre l'invention, est de diminuer, d'une manière importante, les coûts, en supprimant notamment, les différentes pièces nécessaires à la réalisation du dispositif de transmission des mouvements et, par conséquent, en supprimant les différentes opérations d'assemblage et d'usinage en résultant.

Pour résoudre un tel problème, il a été conçu et mis au point un dispositif qui présente un corps en matière plastique moulée présentant directement lors du moulage, des éléments du type rotule aptes à assurer l'accouplement de biellettes de sélection et de réaction fixées sur une partie de la boîte de vitesses, ledit corps présentant, directement au moulage, une bague transversale pour le montage d'un élément de renvoi de passage des vitesses et, d'une manière perpendiculaire aux génératrices de la bague, un agencement apte à permettre l'accouplement de la barre de commande.

Avantageusement, les rotules et la bague sont métalliques.

Pour résoudre le problème posé d'assurer la liaison entre la barre de commande et le corps de transmission, l'agencement d'accouplement de la barre de commande est soit constitué par un insert externe constituant une portée d'assemblage, soit constitué par un insert interne.

Pour résoudre le problème posé de diminuer les coûts, l'ensemble du corps avec ses éléments sont obtenus en une seule opération directement par injection.

Pour résoudre le problème posé d'absorber les vibrations, les rotules sont inserrées en combinaison avec une bague en matière souple faisant office d'amortisseur.

Compte-tenu de l'insertion des rotules, en combinaison avec un élément amortisseur, il est possible d'utiliser des biellettes de conception simplifiée.

Dans ce but, chaque biellettes reçoit par surmoulage, un boitier en matière plastique présentant une empreinte en creux hémisphérique recevant lesdites rotules.

L'invention est exposée, ci-après plus en détail à l'aide des dessins annexés, dans lesquels :

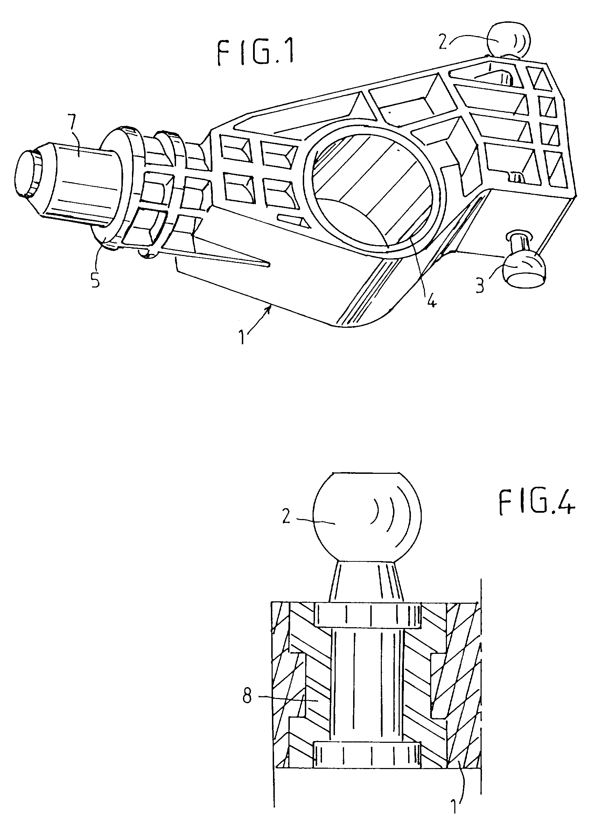

La figure 1 est une vue en perspective du corps du dispositif de transmission.

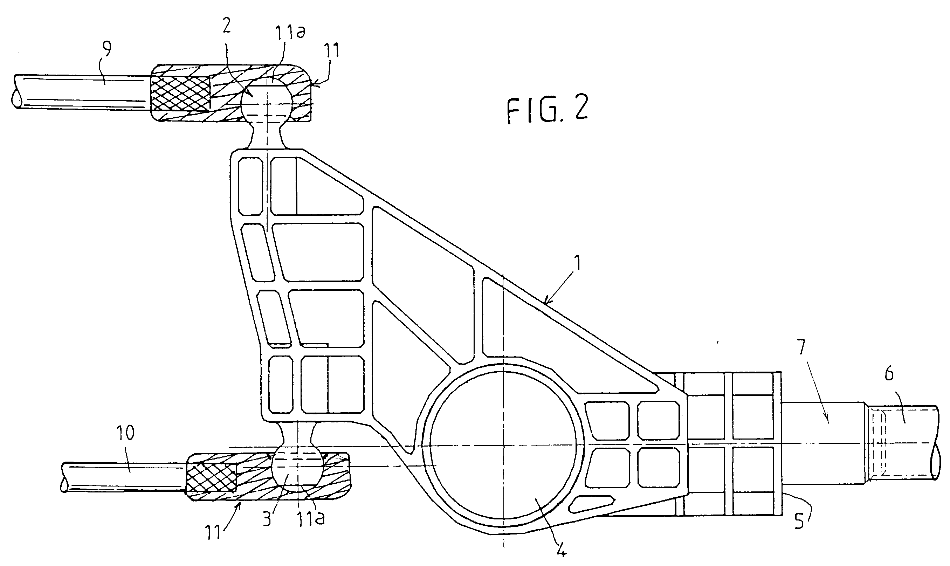

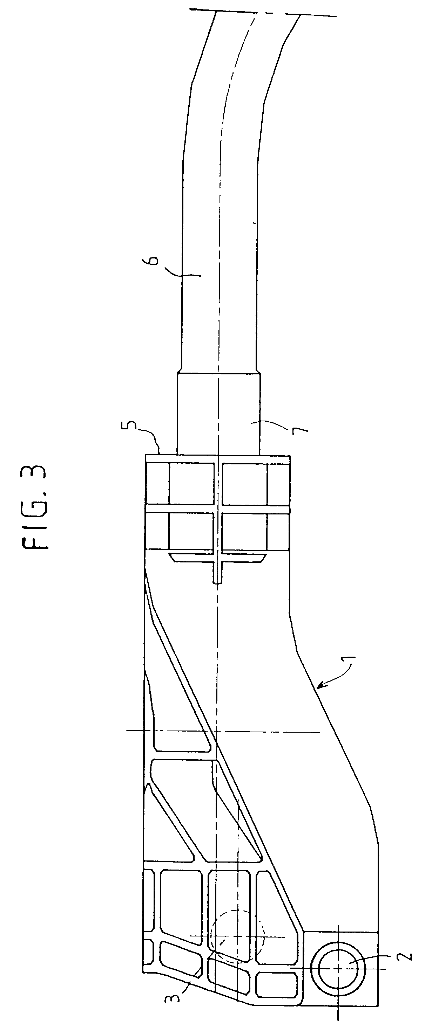

La figure 2 est une vue de face montrant le corps accouplé à la barre de commande, avec le montage des biellettes. La figure 3 est une vue de dessus du corps.

La figure 4 est une vue partielle montrant l'insertion des rotules, en combinaison avec une bague amortisseur.

Le dispositif de transmission comprend un corps (1) en matière plastique moulée, présentant directement lors du moulage, des éléments du type rotules (2) et (3) et une bague transversale (4). De même, le corps (1) présente, toujours lors du moulage, un agencement (5) permettant son accouplement avec la barre de commande (6) de la boîte de vitesses.

Pour éviter tout problème de cisaillement, les rotules (2) et (3) sont métalliques. De manière particulièrement avantageuse, les rotules sont carbonitrurées, augmentant ainsi leur dureté et supprimant tout problème de corrosion. bien évidemment, on n'exclut pas d'autres traitements équivalents à la carbonitruration.

La bague transversale (4) est également métallique, sans pour cela exclure d'autres matières, aptes à assurer efficacement la fonction que doit accomplir cette bague, qui est de permettre le montage de la tête sphérique de l'élément de renvoi, en vue de son entrainement, comme indiqué dans le préambule.

Pour l'accouplement du corps (1) avec la barre de commande (6), on prévoit d'équiper ledit corps d'un insert métallique externe (7) constituant une portée d'assemblage. Cet insert (7) est également disposé dans le moule, pour équiper directement le corps (1), de la même façon que les rotules (2) et (3) et la bague transversale d'entrainement (4). Cet insert (7) peut être moleté ou présenter d'autres agencements externes aptes à permettre le surmoulage de la barre de commande (6).

On n'exclut pas d'équiper le corps (1) d'un insert métallique interne, conformé pour permettre l'accouplement de la barre, directement à l'intérieur du corps (1). Selon une autre caractéristique, les rotules (2) et (3) peuvent être inserrées dans le corps (1), en combinaison avec une bague en matière souple (8) faisant office d'amortisseur. Dans ces conditions, les rotules (2) et (3) peuvent avantageusement coopérer avec des biellettes (9) et (10) du type de celles définies dans la demande de brevet FR 2.670.255 dont le demandeur de la présente est également titulaire.

A cet égard, on rappelle que les extrémités des biellettes reçoivent par surmoulage un boitier en matière plastique (11) présentant une empreinte en creux (11a) de forme hémisphérique, pour coopérer avec les têtes de rotules correspondantes.

On rappelle que ces biellettes (9) et (10) ont pour fonction, d'une manière connue, d'assurer une liaison avec une partie de la boîte de vitesses, en constituant des biellettes de sélection et de réaction.

Les avantages ressortent bien de la description, en particulier on souligne et on rappelle :
- la conception monobloc du corps,
- la diminution des coûts de fabrication,
- l'insertion des rotules et de la bague notamment lors du moulage du corps,
- la précision obtenue permettant d'avoir une meilleure géométrie des zones fonctionnelles,
- la possibilité d'employer des rotules carbonitrurées assurant, d'une part, une meilleure géométrie de la tête sphérique correspondante, par la suppression d'un revêtement externe et permettant, d'autre part, de diminuer de manière importante l'oxydation pendant l'utilisation du véhicule,
- la possibilité d'utiliser des biellettes d'une conception simplifiée, compte-tenu de l'insertion des rotules en combinaison avec une bague de filtration,
- la suppression de l'opération de réalésage de la bague d'entrainement.

## Revendications

1. Dispositif de transmission des mouvements d'une barre de commande pour boîte de vitesses, caractérisé en ce qu'il présente un corps (1) en matière plastique moulée présentant directement lors du moulage, des éléments du type rotule (2) et (3) aptes à assurer l'accouplement de biellettes (9) (10) de sélection et de réaction fixées sur une partie de la boîte de vitesses, ledit corps (1) présentant, directement au moulage, une bague transversale (4) pour le montage d'un élément de renvoi de passage des vitesses et, d'une manière perpendiculaire aux génératrices de la bague, un agencement (5) apte à permettre l'accouplement de la barre de commande (6).

2. Dispositif selon la revendication 1, caractérisé en ce que les rotules (2) et (3) et la bague (4) sont métalliques.

3. Dispositif selon la revendication 1, caractérisé en ce que les rotules (2) et (3) sont carbonitrurées.

4. Dispositif selon la revendication 1, caractérisé en ce que l'agencement d'accouplement de la barre de commande est constitué par un insert externe constituant une portée d'assemblage (7), apte à recevoir par surmoulage, l'extrémité correspondante de ladite barre.

5. Dispositif selon la revendication 1, caractérisé en ce que l'agencement d'accouplement de la barre de commande (6) est constitué par un insert interne.

6. Dispositif selon la revendication 1, caractérisé en ce que l'ensemble du corps (1) avec ses éléments (2) (3) (4) (5) sont obtenus en une seule opération directement par injection.

7. Dispositif selon la revendication 1, caractérisé en ce que les rotules (2) et (3) sont inserrées en combinaison avec une bague en matière souple (8) faisant office d'amortisseur.

8. Dispositif selon la revendication 7, caractérisé en ce que les extrémités des biellettes (9) et (10) aptes à coopérer avec les rotules (2) et (3), reçoivent, par surmoulage, un boitier en matière plastique (11) présentant une empreinte en creux hémisphérique (11a) recevant la tête de rotules correspondantes (2) et (3).
